# EUROPEAN PATENT SPECIFICATION

(11) **EP 2 440 758 B1**
(45) Date of publication and mention of the grant of the patent: **04.11.2015**
(21) Application number: 10728882.1
(22) Date of filing: 20.05.2010
(51) Int. Cl.: F01N 3/28, F01N 3/20, F01N 3/021

(54) **CATALYTIC CONVERTER MODULE**
KATALYSATORMODUL
MODULE DE CONVERTISSEUR CATALYTIQUE

(30) Priority: 11.06.2009 GB 0909987
(43) Date of publication of application: 18.04.2012
(73) Proprietor: Agco SA, 60026 Beauvais (FR)
(72) Inventor: DUCROQUET, Fredric, F-62760 Orville (FR)
(74) Representative: Marden, David Ian
(86) International application number: PCT/IB2010/001205
(87) International publication number: WO 2011/098855

(56) References cited:
- EP-A1- 0 916 389
- EP-A2- 1 312 776
- DE-A1- 2 417 435
- DE-A1- 19 855 093
- US-A- 3 933 216
- US-A- 4 625 511
- US-A- 4 673 423
- US-A1- 2002 073 666
- US-A1- 2003 051 449
- US-A1- 2007 039 316

## Description

The invention relates to catalytic converters employed in the treatment of exhaust emissions from an internal combustion engine and in particularly to the removal of harmful emissions from an exhaust stream.

For many years there has been a desire to reduce harmful emissions from the exhaust of internal combustion engines. Catalytic converters have been employed to provide an environment within which chemical reactions can take place to convert harmful gases into less harmful substances such as carbon dioxide, nitrogen and water. The specific chemistry varies depending upon the gases involved and, in turn, depends upon the fuel combusted within the engine, i.e. petrol or diesel. A catalyst within the catalytic converter typically comprises a ceramic substrate upon which said chemical reactions can take place. US 2003/0051449A1 shows a typical catalyst having a split-flow arrangement.

The size of the catalyst is largely dependant upon the size of the engine. This presents a hurdle to vehicle manufacturers when trying to incorporate a catalytic converter of sufficient size within vehicles having limited space availability. The problem is compounded by the negative effect on back pressure within the exhaust stream created by the catalytic converter. The back pressure is dependant upon the path length through the catalyst encountered by the exhaust stream. Attempts to reduce the back pressure have been made by increasing the radial diameter of the catalyst which allows a reduction in the axial length. However, for large engine applications the catalytic converter package becomes too large to fit into the available space whist maintaining acceptably low back pressure. Also, a larger diameter catalyst suffers from uneven flow distribution across the area, i.e. a greater flow at the centre than around the periphery.

A solution for arranging catalysts in a vertical arrangement is show in the exhaust stack of US 2007/0039316A1.

The above problems ar particularly prevalent in agricultural tractors in which the trend is for a growth in engine sizes which are disproportionate to the space availability under the engine hood.

It is therefore one object of the invention to provide an agricultured tractor comprising a catalytic converter module which can be fitted into limited space on the vehicle whilst maintaining a sufficiently low back pressure;

It is another object of the invention to provide a compact catalytic converter module that utilises simple, reliable, low cost components.

In accordance with the invention there is provided an agricultural tractor comprising an exhaust stack, the exhaust stack comprising a catalytic converter module comprising an elongate housing having a length along which an exhaust stream passes between an inlet and an outlet, a first and a second catalyst unit arranged serially within the length of the housing and spaced from one another, and a passive exhaust scream dividing element which divides and directs the exhaust stream into two mutually exclusive paths, a first path which passes through the first catalyst unit and bypasses the second catalyst unit, and a second path which bypasses the first catalyst unit and passes through the second catalyst unit.

By dividing the exhaust stream into two sub-streams which pass along the first and second paths respectively, the effective catalyst area is divided into two each area being presented to the sub-streams in parallel. Advantageously, by geometrically arranging the two catalyst units in a serial arrangement, the cross-sectional area of the module can be significantly less than the total area of the catalyst. This allows the catalytic converter module to be located conveniently on a vehicle without being cumbersome and requiring large amounts of available space.

Advantageously further still, the serial arrangement of two catalyst units in accordance with the invention delivers a more even distribution of the total exhaust steam to the catalyst material.

Furthermore, by forming the dividing element from passive components, the overall construction is cheap, simple and robust.

In a first embodiment, hereinafter termed 'the coaxial arrangement', the first and second paths are mutually co-axial along the lengths of the first and second catalyst units. Advantageously, such a co-axial arrangement delivers a symmetric exhaust stream distribution across the surface area of the module and further minimizes internal turbulence and thus back pressure.

In one arrangement the second path bypasses the first catalyst unit around the outside thereof and the first path bypasses the second catalyst unit around the outside thereof. Advantageously this allows a simple, uninterrupted, volume catalyst unit to be employed which is disposed along a central axis of the catalytic converter module.

In a second embodiment, hereinafter termed 'the offset arrangement', each catalyst unit is radially offset in mutually different directions from a longitudinal centre line of the elongate housing. The offset arrangement is significantly simpler to assemble and is more robust than the coaxial arrangement. The respective radial offset of the catalyst units is preferably in mutually opposing directions. Advantageously, this assists in centring the centre of mass of the overall module making it more stable and less vulnerable to vibration damage when mounted in position.

In the offset arrangement each catalyst unit may abut an inner surface of the elongate housing and, preferably further still may be secured to the inner surface of the elongate housing. Alternatively, at least one of the catalyst units may be integrated into the elongate housing. In both cases, the strong bond between the housing and the catalyst units delivers the robust construction of the offset arrangement.

The dividing element comprises a perforated surface so that a portion of the exhaust stream passing through perforations is directed into one of the first and second paths.

The dividing element either comprises a diverging cone-shaped element which covers the upstream end of the first catalyst unit so that the portion of the exhaust stream passing through the perforations is directed into the first path. Accordingly, the tapered exterior walls of the cone shaped cap direct the incoming exhaust stream towards the second path whilst the holes divert a portion of the exhaust stream along the first path and into the first catalyst unit. Such a cone shaped cap can sealably mate with the end of the first catalyst unit. Alternatively, the dividing element comprises a converging cone-shaped element which covers the inlet so that the portion of the exhaust stream passing through the perforations is directed into the second path.

The second path continues past the first catalyst unit, the passage of which may be defined between outer walls of the first catalyst unit and inner walls of the housing thereby providing an annular passage in the case of the coaxial arrangement.

The module may further comprise transition means to guide the first path from a downstream end of the first catalyst unit around the second catalyst unit and to guide the second path into an upstream end of the second catalyst unit. The transition means may take a number of different forms as will be appreciated by the skilled person. Furthermore, the transition means may be specifically designed to conform with the chose arrangement of catalyst units within the housing.

In the case of a coaxial arrangement, the transition (or crossover) means may comprise a conical collar which is connected to the downstream end of the first catalyst unit and has a profile at its downstream end which seals with the inner wall of the housing. The outwardly tapering collar serves to direct the exhaust gases within the first path outwardly from the exit of the first catalyst unit so as to pass around the outside of the second catalyst unit. The transition means may further comprise a cone shaped cap which covers the upstream end of the second catalyst unit. Pipes may be provided to connect holes formed within the walls of the collar and cap to bridge the second path into the second catalyst unit. Advantageously this arrangement provides a low resistance passage for the sub-streams passing along the first and second paths respectively.

In the case of an offset arrangement, the transition means may comprise an internal wall attached to the downstream end of the first catalyst unit and the upstream end of the second catalyst unit, the wall providing a sealed barrier between the first and second paths. In general, the transition means is more simple in construction for an offset arrangement.

The module preferably comprises combining means which serves to combine the gases from the first and second paths into a single exhaust stream ahead of the outlet. Alternatively, the first and second paths may be ejected from the housing via respective exhaust vents. Combining means may comprise a collar which has a profile at a downstream end which seals with the inner wall of the housing and comprises holes through which the second path passes. The tapered collar with holes advantageously provides a low turbulence means of combining said exhaust streams.

Preferably the module housing is cylindrical thus delivering an optimum exhaust gas distribution across the area and maximising strength in construction.

The first and second catalyst units preferably have a substantially equal volume thereby equalising the sub-streams flowing along the two paths. Furthermore, the catalyst units can share the same or similar components easing construction and maintenance.

The passive dividing element is preferably designed so that the gas flow through each of the first and second paths is substantially equal. In the perforated element, the distribution between the two paths can be adjusted at the design stage by changing the number and/or size of the holes provided.

The inventive catalytic converter module has application in any exhaust emission treatment system which is connected to the exhaust of an internal combustion engine. Although applicable to petrol engines, the invention lends itself particularly well to the treatment of exhaust emissions from diesel engines. For example, the exhaust emissions treatment system embodying the catalytic converter module may comprise, between an engine exhaust and the module, a particulate filter and reductant injection means arranged for selective catalytic reduction (SCR) for the removal of nitrogen oxides. In such a system a nitrogen oxide sensor is preferably located within the housing upstream of the outlet to provide a means to monitor the efficiency of the emissions treatment.

The exhaust emissions treatment system is embodied within an agricultural tractor. A catalytic converter module is integrated into an upright exhaust stack having an outlet which is directed into the environment. Advantageously the available space within the exhaust stack is exploited by the invention so as to avoid the requirement for additional volume under the hood for the catalytic converter. This greatly enhances the design freedom of the overall engine installation. Preferably further still the exhaust stack is substantially aligned with a cab front pillar so that a line of sight of the driver intersects both the pillar and stack. Advantageously, this minimizes the obstruction to the field of view for the driver.

An exhaust stack comprising the catalytic converter module may be curved along its length so as to conform better with the profile of a tractor to which the stack may be attached.

Further advantages of the invention will become apparent from the following description of specific embodiments with reference to the appended drawings in which:-
Figure 1 is a schematic representation of an exhaust emissions treatment system embodying a catalytic converter module in accordance with the invention;
Figure 2 is a schematic sectional view of a catalytic converter module in accordance with a first embodiment of the invention comprising two catalyst units in a coaxial arrangement;
Figure 3 is an exploded perspective view illustrating the construction of the module of Figure2;
Figure 4 is an enlarged sectional view of the crossover means within the module of Figure 2;
Figure 5 is a sectional view of a tractor exhaust stack including an integrated catalytic converter module in accordance with the first embodiment of the invention;
Figure 6 is a perspective view of a tractor including the exhaust stack of Figure 5;
Figure 7 is a schematic sectional view of a catalytic converter module in accordance with a second embodiment of the invention comprising two catalyst units in an offset arrangement;
Figure 8 is perspective view showing a section through a tractor exhaust stack including an integrated catalytic converter module in accordance with the second embodiment of the invention;
Figure 9 is an exploded perspective view illustrating the construction of the exhaust stack of Figure 8;
Figure 10 is a side view of the exhaust stack of Figure 8 shown with part if the housing cut away; and,
Figure 11 is an enlarged perspective view of the crossover means within the exhaust stack of Figure 8.

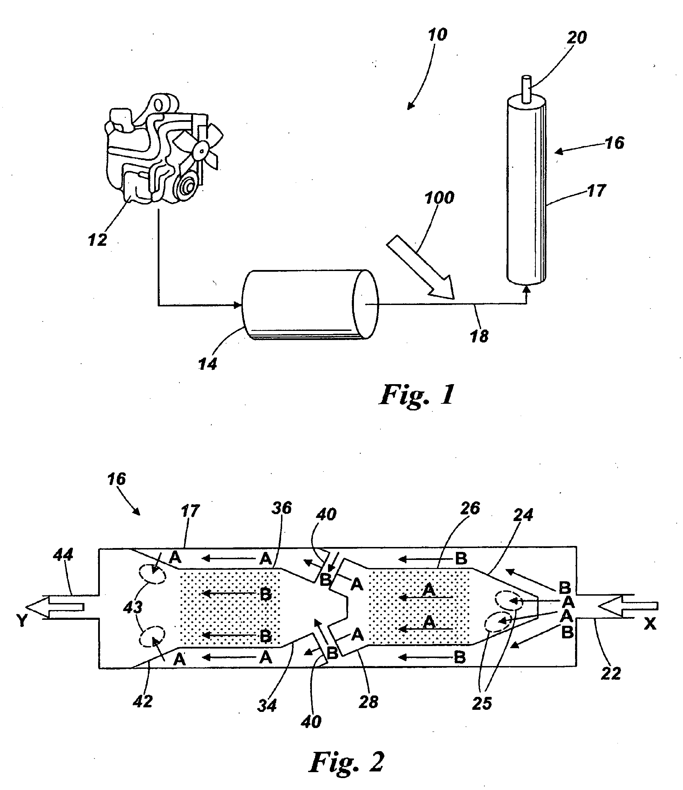

With reference to Figure 1, an exhaust emissions treatment system 10 is shown. Exhaust gases from a diesel engine 12 pass through a particulate filter 14 and into a catalytic converter module 16 having a housing 17. Downstream of the particulate filter 14 an aqueous solution of urea is injected into the exhaust stream as represented by arrow 100. The urea solution is mixed with the exhaust gases as it passes along pipe 18 and into the module 16.

The exhaust gas/urea solution mixture is subjected to chemical reactions within the catalytic converter module 16 so as to reduce harmful nitrogen oxides to nitrogen and water before being expelled through exhaust pipe 20 into the environment. The invention involves the arrangement of the components within the catalytic converter module 16 as will be described below.

### Coaxial Arrangement

The principles behind the inventive catalytic converter module will be described with reference to Figures 2, 3 and 4 which show a coaxial arrangement of catalyst units. With particular reference to Figure 2, an exhaust gas stream X is fed into the module 16 via inlet pipe 22 and is propelled through the module 16 by the pressure created by the engine exhaust.

From here, the exhaust stream X passes into the cylindrical housing of the module 16. An exhaust stream dividing element in the form of a cone shaped cap 24 that diverges in the general direction of flow and serves to divide the exhaust stream X into a first sub-stream (represented by arrows A) and a second sub-stream (represented by arrows B).

The first sub-stream A passes along a first path and the second sub-stream B passes along a second path which is mutually exclusive from the first path. It should be understood that the reference 'A' in the following description shall refer interchangeably to both the first sub-stream of exhaust gases and to the physical passage, or path, that guides the first sub-stream. The reference 'B' in the following description shall refer to the second sub-stream of exhaust gases and to the physical passage, or path, that guides the second sub-stream.

Holes 25 provided in the tapered walls of the cone shaped cap 24 define an entrance to the first path and a proportion of exhaust stream X passes therethrough forming the first sub-stream A. The remaining gas flow is directed by the walls of cone shaped cap 24 coaxially around the outside of a first catalyst unit 26 thereby forming the second sub-stream B.

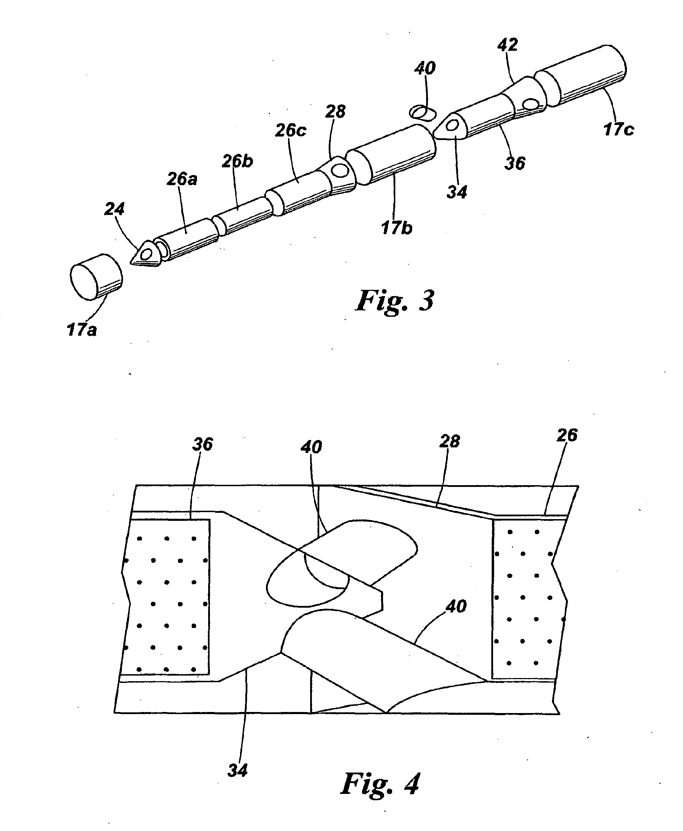

The first catalyst unit includes an annular mattress 26a which surrounds a cylindrical ceramic substrate 26b (Figure 3) enclosed by a catalyst unit housing 26c. The mattress 26c is used to protect the ceramic which has a low dilatation, in the sheet metal housing, even under high or low temperatures. While the first path passes through the first catalyst unit, the second path by-passes the unit 26 in parallel wherein the boundaries of the second path are provided by the outer walls of the first catalyst unit housing 26c and the inner walls of module housing 17.

After passing through the ceramic material 26b of first catalyst unit 26 the gasses on the first path A are directed outwardly by a tapered collar 28 which is integrated with first catalyst unit housing 26c. The conical collar 28 has a profile at its downstream end which seals with the inner wall of the module housing 17 so as to maintain the separation of the two sub-streams A and B.

The first sub-stream A of gasses is further assisted radially outwardly by a second cone shaped cap 34 that diverges in the general direction of flow and which covers the upstream end of a second catalyst unit 36. In essentially the same manner as per the first cone shaped cap 24, the first sub-stream A (on the first path) is directed from the first catalyst unit 26 around the outside of second catalyst unit 36 by the tapered diverging walls of second cone shaped cap 34.

The second sub-stream B is conveyed across the radially diverging first sub-stream A by three pipes 40 which are connected between respective holes formed within the walls of collar 28 and second cone shaped cap 34 as shown in Figures 2 and 4. The gases of the second sub-stream on the second path B then pass through the second catalyst unit 36 which includes a ceramic filter volume having a similar compilation to that of first catalyst unit 26. In parallel to the second path B, the purified gases on first path A are conveyed along the outside of second catalyst unit 36 in a coaxial manner.

The crossover means provided by the pipes 40, collar 28 and cap 34 may be designed to present the same backpressure (and thus gas flow) to the sub-streams following the respective paths A and B. For example, the diameter of the pipes 40 may be chosen so that the backpressure presented to the sub-stream on path B is substantially the same as that presented to the sub-stream on path A by the geometry of the collar 28, cap 34 and housing 17. This ensures that the gas currents directed along the respective paths are substantially matched, thus optimising usage of the two catalyst units.

Integrated on the downstream end of second catalyst unit 36, a recombination manifold element 42 serves to recombine the sub-streams following first path A and second path B. Holes 43 formed within the walls of manifold 42 direct gases on path A radially inwardly to combine with the gases on path B before being ejected through outlet pipe 44 as a single exhaust stream Y.

To summarise the inventive principle embodied within the described arrangement the catalytic converter module 16 houses two catalyst units 26,36 which are geometrically arranged in a serial manner whilst the exhaust gas stream is processed in two parallel sub-streams A and B. This enables exploitation of a catalyst having an effective area larger than that of the module housing 17 thus allowing the module to be incorporated conveniently into available volumes whilst maintaining a low back pressure.

With reference to Figure 3, the module housing 17 in this example is separated into three portions 17a; 17b, 17c. It will be appreciated that the ceramic elements of second catalysts unit 36 are not shown in exploded form in Figure 3.

The above described example includes two catalyst units arranged serially within an elongate housing. However it is envisaged that three or even more individual catalyst units may be arranged in the same manner each having a mutually exclusive passage for a sub-stream of exhaust gases. Despite increased complexity in providing additional bypass passages within the housing, such an arrangement would benefit in the same manner as described above and falls within the scope of the present invention.

It is envisaged that a single bypass passage may be provided down the centre of each respective catalyst unit wherein the ceramic catalyst has a shape of annular section and surrounds the bypass passages. In such a case, a similar crossover arrangement could be employed without any significant structural changes to those described.

X The passive nature of the dividing element allows simple construction and costs to be kept at a minimum.

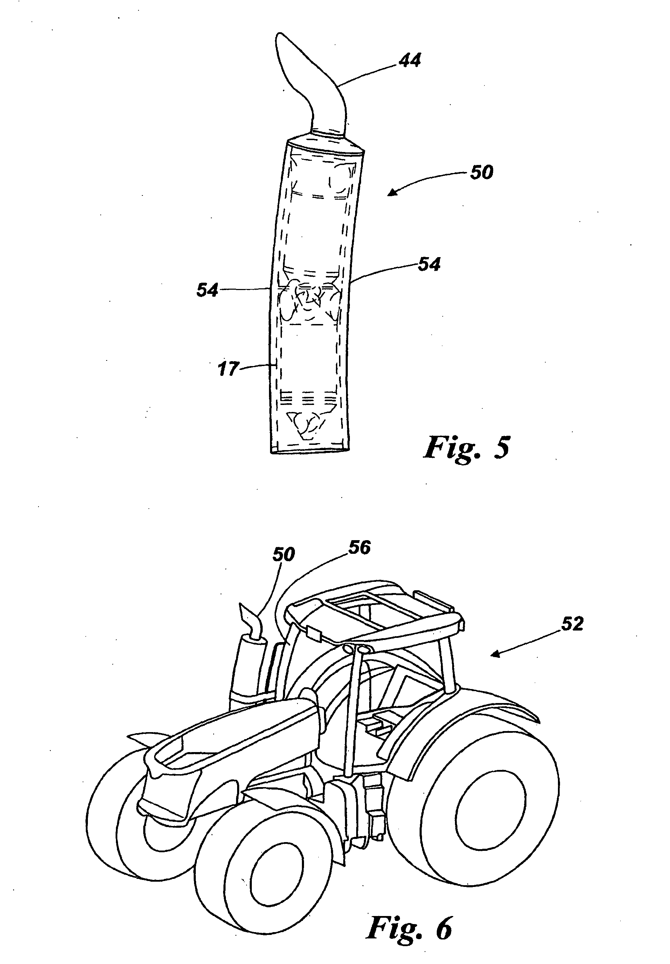

A significant advantage of the described invention is the ability to integrate the catalytic converter module conveniently into existing volumes present on existing vehicles. New demands on the treatment on exhaust gases on agricultural tractors dictate that more components associated with emissions treatment must be incorporated on to the tractor. As shown in Figure 5, a catalytic converter module as described above is simply integrated into the exhaust stack 50 of a tractor 52 (Figure 6). The exhaust stack 50 adopts an exterior profile which is similar, if not the same, to that of an existing tractor. This carries the advantage that the required components are incorporated without reducing the visibility to the driver or sacrificing fuel tank volume. As can be seen, the module 16 is simply enclosed within heat protection grills 54 which form part of the existing exhaust stack 50.

The upright, yet curved, exhaust stack 50 is positioned in alignment with a front cab pillar 56 which minimizes the visual obstruction presented to the driver.

Despite the simple integration described in relation to a tractor it is envisaged that the invention can be applied to exhaust emissions treatment systems on other vehicles such as trucks, utility tractors and cars for example. Furthermore, although described above in relation to selective catalytic reduction, the described catalytic converter module can be applied to treating the emissions of petrol engines.

### Offset arrangement

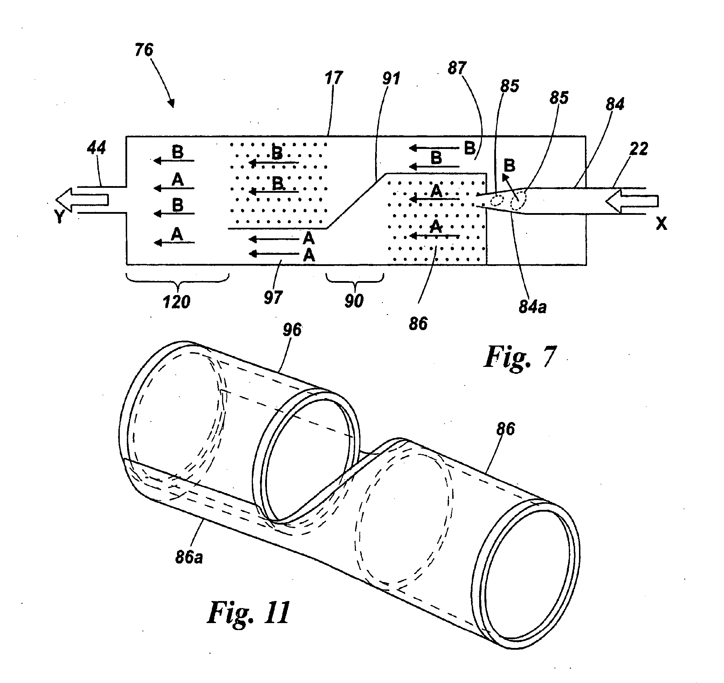

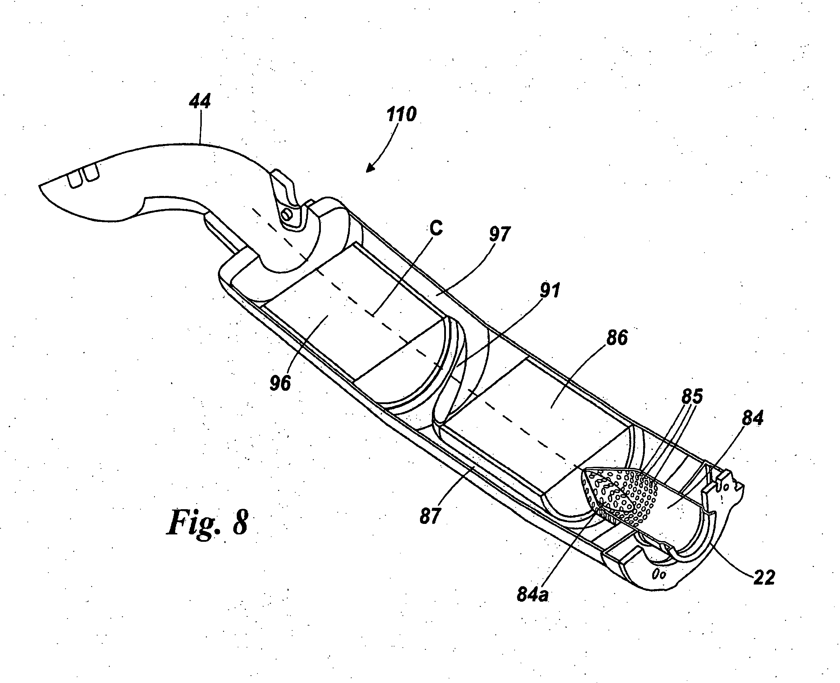

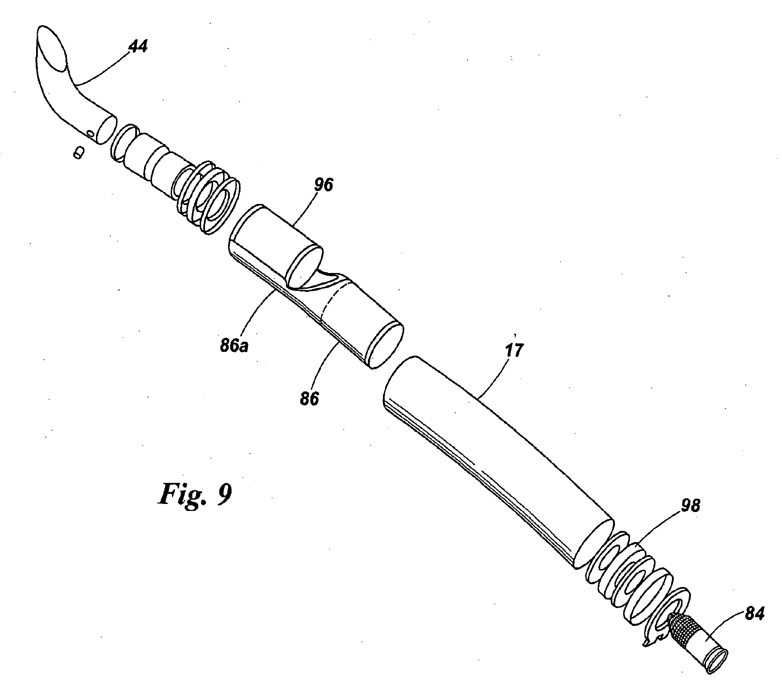

Although the above described embodiment includes coaxial bypass passages around the respective catalyst units 26,36 it is envisaged that the layout need not be radially symmetrical. Figures 7 to 11 illustrate an offset arrangement in which each of two catalyst units is radially offset in mutually opposing directions from a longitudinal centre line of the elongate housing. The following description of the offset arrangement refers to both Figure 7 which shows the concept in schematic form and to Figures 8 to 11 which illustrates a specific construction of an exhaust stack 110 embodying the offset arrangement.

As in Figure 2, an exhaust gas stream X is fed into module 76 via inlet pipe 22 and is propelled through the module 76 by the pressure created by the engine exhaust. From here, the exhaust stream X passes into a passive exhaust stream dividing element 84 which divides and directs the exhaust stream X into two mutually exclusive paths, a first path A and a second path B. In this case, the dividing element 84 comprises a converging cone-shaped element 84a having perforations 85. The dividing element 84 covers the inlet 22 so that a portion of the exhaust stream X passes through the perforations 85 and is directed into the second path B. The remaining portion of the exhaust stream X is conveyed into the first catalyst unit 86.

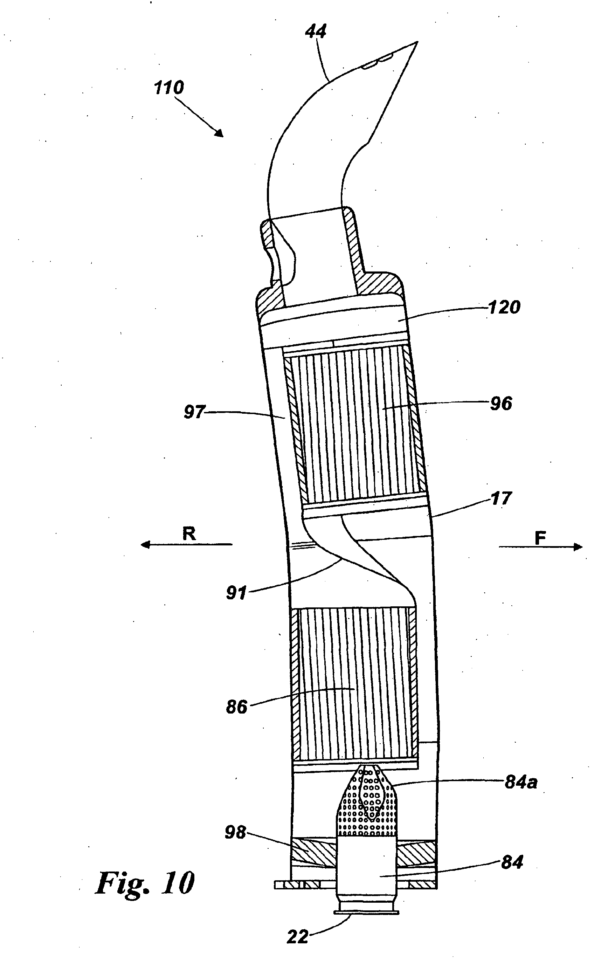

Characteristic of the offset arrangement, the first and second catalyst units 86, 96 are radially offset from a longitudinal centre line C (Figure 8). In the coaxial arrangement described above the catalyst units 26, 36 are substantially centred on the longitudinal centre line C whereas, in the offset arrangement, the catalyst units 86, 96 are offset radially. As can be seen best in Figure 10, the first catalyst unit 86 is offset rearwardly (arrow R) with respect to the normal direction of travel of a tractor to which the exhaust stack 110 is attached, whereas the second catalyst unit 96 is offset in a forward direction (arrow F). By offsetting the two catalysts in opposite directions R,F the centre of gravity of the overall exhaust stack is maintained near to the longitudinal centre line thus maintaining the stability.

Qne side of each of the two catalyst units 86, 96 abuts the inner wall of the housing 17 thereby leaving a 'by-pass' passage on the opposite side defined by the outside surface of the respective catalyst unit and the inner wall of the housing 17.

Returning to Figure 7, the first sub-stream A passes through the first catalyst unit 86 and exits into a transition region 90. Parallel to first sub-stream A, second sub-stream B is conveyed past the first catalyst unit 86 along a first by-pass passage 87 and to transition region 90.

An internal transition wall 91 provides a boundary between the first path A and second path B in the transition region 90. The transition wall 91 is attached to the downstream end of the first catalyst unit 86 and the upstream end of the second catalyst unit 96 and is shaped accordingly to provide said barrier.

The first sub-stream A by-passes the second catalyst unit 96 via second by-pass passage 97 whilst the second sub-stream B is directed through the second catalyst unit 96.

Upon exiting the second catalyst unit 96, the second sub-stream B combines with the first sub-stream A in a combination region 120. The combined gas stream Y is then ejected to the atmosphere through outlet pipe 44.

The exhaust stack 110 that adopts the offset arrangement is simpler in construction to the exhaust stack 50 of the coaxial form. The perforated dividing element 84 is held on a central axis by an annular fixing element 98. The first catalyst element 86 includes a cradle element 86a which is formed by an extension to the body of the first catalyst element 86 in the longitudinal direction. The cradle element 86a is constructed so that mating support is provided to the second catalyst unit 96 whilst maintaining a gap to provide the second by-pass passage 97. The transition wall 91 is, in this example, integrated into the body of the first catalyst unit 86.

The conformity between the profiles of the catalyst units 86, 96 and the housing 17 holds the catalysts in position in the radial direction. The catalyst units 86, 96 may be welded, or secured by other practical means, to the housing 17.

Although the offset arrangement described involves radial offset in opposing directions, the catalyst units could instead be radially offset in any direction provided a by-pass passage is provided next to each unit.

Moreover, the catalyst units 86, 96 could be integrated into the housing components instead of forming them from individual parts.

From reading the present disclosure, other modification will be apparent to persons skilled in the art. Such modifications may involve other features which are already known in the field of catalytic converters and exhaust stacks and component parts therefore and which may be used instead of or in addition to features already described herein.

## Claims

1. An agricultural tractor (52) comprising an exhaust stack (50,110), **characterised in that** the exhaust stack comprises a catalytic converter module (16,76) comprising an elongate housing (17) having a length along which an exhaust stream (X) passes between an inlet (22) and an outlet (44), a first and a second catalyst unit (26,36) arranged serially within the length of the housing and spaced from one another, and a passive exhaust stream dividing element (24,84) which divides and directs the exhaust stream into two mutually exclusive paths, a first path (A) which passes through the first catalyst unit (26,86) and bypasses the second catalyst unit (36), and a second path (B) which bypasses the first catalyst unit (26,86) and passes through the second catalyst unit (36,96), wherein the dividing element (24,84) is perforated and so that a portion of the exhaust stream passing through perforations is directed into one of the first and second paths,
**characterised in that** the dividing element comprises:
a diverging cone-shaped element (24) which covers the upstream end of the first catalyst unit (26) so that the portion of the exhaust stream (X) passing through the perforations is directed into the first path (A), or
a converging cone-shaped element (84) which covers the inlet (22) so that the portion of the exhaust stream (X) passing through the perforations (85) is directed into the second path (B).

2. An agricultural tractor (52) according to Claim 1, wherein the first and second paths (A,B) are mutually coaxial along the lengths of the first and second catalyst units (26,36).

3. An agricultural tractor (52) according to Claim 1, wherein each catalyst unit (86,96) is radially offset in mutually different directions from a longitudinal centre line of the elongate housing (17).

4. An agricultural tractor (52) according to Claim 3, wherein the respective radial offset of the catalyst units (86,96) is in mutually opposing directions.

5. An agricultural tractor (52) according to Claim 4, wherein each catalyst unit (86,96) abuts an inner surface of the elongate housing (17).

6. An agricultural tractor (52) according to Claim 5, wherein each catalyst unit (86,96) is secured to the inner surface of the elongate housing (17).

7. An agricultural tractor (52) according to Claim 4, wherein at least one of the catalyst units (86,96) are integrated into the elongate housing (17).

8. An agricultural tractor (52) according to any preceding claim, further comprising transition means to guide the first path (A) from a downstream end of the first catalyst unit (26) around the second catalyst unit (36) and to guide the second path (B) into an upstream end of the second catalyst unit (36).

9. An agricultural tractor (52) according to Claim 8 and Claim 2, wherein the transition means comprises a conical collar (28) connected to the downstream end of the first catalyst unit (26) and has a profile at a downstream end which seals with the inner wall of the housing (17) so as to direct the first path (A) outwardly and around the second catalyst unit (36).

10. An agricultural tractor (52) according to Claim 9, wherein the transition means further comprises a cone-shaped cap (34) which covers the upstream end of the second catalyst unit (36), and pipes (40) connect holes within the walls of the collar (28) and cap to direct the second path (B) into the second catalyst unit (36).

11. An agricultural tractor (52) according to any preceding claim, further comprising combining means (42) connected to the downstream end of the second catalyst unit (36) which combines the first (A) and second (B) paths upstream of the outlet.

12. An agricultural tractor (52) according to Claim 11, wherein the combining means comprises a collar (42) which has a profile at a downstream end which seals with the inner wall of the housing (17) and comprises holes (43) through which the second path (B) passes.

13. An agricultural tractor (52) according to any preceding claim, wherein the passive dividing element (24,84) is designed so that the gas flow through each of the first (A) and second (B) paths is substantially equal.

14. An agricultural tractor (52) according to Claim 3, wherein the first catalyst unit (86) is radially offset in a direction towards the rear of the tractor and the second catalyst unit (96) is radially offset in a direction towards the front of the tractor.

15. An agricultural tractor according to any preceding claim, wherein the exhaust stack (50,110) is substantially aligned with a cab front pillar (56) so that a line-of-sight of the driver intersects both the pillar (56) and stack (50, 110).

## Patentansprüche

1. Landwirtschaftlicher Traktor (52) mit einem Abgasstutzen (50, 110), **dadurch gekennzeichnet, dass** der Abgasstutzen ein Katalysatormodul (16, 76) mit einem langgestreckten Gehäuse (17) mit einer Länge, entlang der ein Abgasstrom (X) zwischen einem Einlass (22) und einem Auslass (44) hindurchtritt, eine erste und eine zweite Katalysatoreinheit (26, 36), die seriell innerhalb der Länge des Gehäuses und beabstandet zueinander angeordnet sind, und ein passives Abgasstromteilungselement (24, 84) aufweist, welches den Abgasstrom in zwei getrennte Pfade teilt und führt, wobei sich ein erster Pfad (A) durch die erste Katalysatoreinheit (26, 86) erstreckt und die zweite Katalysatoreinheit (36) umgeht, und ein zweiter Pfad (B) die erste Katalysatoreinheit (26, 86) umgeht und sich durch die zweite Katalysatoreinheit (36, 96) erstreckt, wobei das Teilungselement (24, 84) perforiert und so ausgebildet ist, dass ein Teil des Abgasstroms durch Öffnungen hindurchtritt und in den ersten oder den zweiten Pfad geführt wird,
**dadurch gekennzeichnet, dass** das Teilungselement Folgendes aufweist:
ein divergierendes kegelförmiges Element (24), welches das stromaufwärtige Ende der ersten Katalysatoreinheit (26) so abdeckt, dass der durch die Öffnungen hindurchtretende Teil des Abgasstroms (X) in den ersten Pfad (A) geführt wird, oder
ein konvergierendes kegelförmiges Element (84), welches den Einlass (22) so abdeckt, dass der durch die Öffnungen (85) hindurchtretende Teil des Abgasstroms (X) in den zweiten Pfad (B) geführt wird.

2. Landwirtschaftlicher Traktor (52) nach Anspruch 1, wobei der erste und der zweite Pfad (A, B) zueinander koaxial entlang der Längen der ersten und der zweiten Katalysatoreinheit (26, 36) verlaufen.

3. Landwirtschaftlicher Traktor (52) nach Anspruch 1, wobei jede Katalysatoreinheit (86, 96) radial in unterschiedliche Richtungen zu einer Längsmittelachse des langgestreckten Gehäuses (17) versetzt angeordnet ist.

4. Landwirtschaftlicher Traktor (52) nach Anspruch 3, wobei der entsprechende radiale Versatz der Katalysatoreinheiten (86, 96) in entgegengesetzte Richtungen verläuft.

5. Landwirtschaftlicher Traktor (52) nach Anspruch 4, wobei jede Katalysatoreinheit (86, 96) an einer inneren Oberfläche des langgestreckten Gehäuses (17) anliegt.

6. Landwirtschaftlicher Traktor (52) nach Anspruch 5, wobei jede Katalysatoreinheit (86, 96) an der inneren Oberfläche des langgestreckten Gehäuses (17) befestigt ist.

7. Landwirtschaftlicher Traktor (52) nach Anspruch 4, wobei mindestens eine der Katalysatoreinheiten (86, 96) in das langgestreckte Gehäuse (17) integriert ist.

8. Landwirtschaftlicher Traktor (52) nach mindestens einem der vorangehenden Ansprüche, weiterhin mit einem Überführungsmittel zum Führen des ersten Pfads (A) von einem stromabwärtigen Ende der ersten Katalysatoreinheit (26) um die zweite Katalysatoreinheit (36) herum und zum Führen des zweiten Pfads (B) in ein stromaufwärtiges Ende der zweiten Katalysatoreinheit (36).

9. Landwirtschaftlicher Traktor (52) nach Anspruch 8 und Anspruch 2, wobei das Überführungsmittel einen konischen Kragen (28) aufweist, der mit dem stromabwärtigen Ende der ersten Katalysatoreinheit (26) verbunden ist und an einem stromabwärtigen Ende ein Profil besitzt, welches mit der inneren Wandung des Gehäuses (17) so dichtet, dass der erste Pfad (A) nach außen und um die zweite Katalysatoreinheit (36) herum geführt wird.

10. Landwirtschaftlicher Traktor (52) nach Anspruch 9, wobei das Überführungsmittel weiterhin eine kegelförmige Kappe (34) aufweist, die das stromaufwärtige Ende der zweiten Katalysatoreinheit (36) abdeckt, wobei Rohre (40) Löcher in den Wandungen des Kragens (28) und der Kappe verbinden, um den zweiten Pfad (B) in die zweite Katalysatoreinheit (36) zu führen.

11. Landwirtschaftlicher Traktor (52) nach einem der vorangehenden Ansprüche, weiterhin mit einem Kombinierungsmittel (42), welches mit dem stromabwärtigen Ende der zweiten Katalysatoreinheit (36) verbunden ist und den ersten Pfad (A) und den zweiten Pfad (B) stromabwärts des Auslasses miteinander kombiniert.

12. Landwirtschaftlicher Traktor (52) nach Anspruch 11, wobei das Kombinierungsmittel einen Kragen (42) aufweist, der an einem stromabwärtigen Ende ein Profil besitzt, welches die innere Wandung des Gehäuses (17) dichtet und Löcher (43) aufweist, durch die der zweite Pfad (B) hindurchtritt.

13. Landwirtschaftlicher Traktor (52) nach einem der vorangehenden Ansprüche, wobei das passive Teilungselement (24, 84) so ausgebildet ist, dass der Gasfluss durch den ersten Pfad (A) im Wesentlichen gleich dem Gasfluss durch den zweiten Pfads (B) ist.

14. Landwirtschaftlicher Traktor (52) nach Anspruch 3, wobei die erste Katalysatoreinheit (86) radial in Richtung des Hecks des Traktors und die zweite Katalysatoreinheit (96) radial in Richtung der Front des Traktors versetzt ist.

15. Landwirtschaftlicher Traktor nach einem der vorangehenden Ansprüche, wobei der Abgasstutzen (50, 110) im Wesentlichen bündig zu einer vorderen Säule (56) der Kabine ausgerichtet ist, so dass eine Blickrichtung des Fahrers sowohl die Säule (56) als auch den Stutzen (50, 110) schneidet.

## Revendications

1. Tracteur agricole (52) comprenant un empilage d'échappement (50, 110), **caractérisé en ce que** l'empilage d'échappement comprend un module convertisseur catalytique (16, 76) comprenant une enveloppe allongée (17) présentant une longueur le long de laquelle passe un courant d'échappement (X) entre une entrée (22) et une sortie (44), une première et une seconde unités de catalyse (26, 36) agencées en série suivant la longueur de l'enveloppe et espacées l'une par rapport à l'autre, et un élément de division de courant d'échappement passif (24, 84) qui divise et dirige le courant d'échappement suivant deux trajets mutuellement exclusifs, un premier trajet (A) qui passe à travers la première unité de catalyse (26, 86) et contourne la seconde unité de catalyse (36), et un second trajet (B) qui contourne la première unité de catalyse (26, 86) et passe à travers la seconde unité de catalyse (36, 96), dans lequel l'élément de division (24, 84) est perforé et de telle sorte qu'une partie du courant d'échappement passant à travers les perforations est dirigée vers l'un des premier et second trajets,
**caractérisé en ce que** l'élément de division comprend :
un élément en forme de cône divergent (24) qui recouvre l'extrémité amont de la première unité de catalyse (26) de telle sorte que la partie du courant d'échappement (X) passant à travers les perforations est dirigée vers le premier trajet (A), ou
un élément en forme de cône convergent (84) qui recouvre l'entrée (22) de telle sorte que la partie du courant d'échappement (X) passant à travers les perforations (85) est dirigée vers le second trajet (B).

2. Tracteur agricole (52) selon la revendication 1, dans lequel les premier et second trajets (A, B) sont mutuellement coaxiaux sur les longueurs des première et seconde unités de catalyse (26, 36).

3. Tracteur agricole (52) selon la revendication 1, dans lequel chaque unité de catalyse (86, 96) est décalée radialement dans une direction mutuellement différente par rapport à une ligne d'axe longitudinale de l'enveloppe allongée (17).

4. Tracteur agricole (52) selon la revendication 3, dans lequel le décalage radial respectif des unités de catalyse (86, 96) est réalisé dans des directions mutuellement opposées.

5. Tracteur agricole (52) selon la revendication 4, dans lequel chaque unité de catalyse (86, 96) vient en butée sur une surface interne de l'enveloppe allongée (17).

6. Tracteur agricole (52) selon la revendication 5, dans lequel chaque unité de catalyse (86, 96) est fixée sur la surface interne de l'enveloppe allongée (17).

7. Tracteur agricole (52) selon la revendication 4, dans lequel au moins l'une des unités de catalyse (86, 96) est intégrée dans l'enveloppe allongée (17).

8. Tracteur agricole (52) selon l'une quelconque des revendications précédentes, comprenant en outre un moyen de transition permettant de guider le premier trajet (A) à partir d'une extrémité aval de la première unité de catalyse (26) autour de la seconde unité de catalyse (36) et de guider le second trajet (B) vers une extrémité amont de la seconde unité de catalyse (36).

9. Tracteur agricole (52) selon les revendications 8 et 2, dans lequel le moyen de transition comprend un collier conique (28) raccordé à l'extrémité aval de la première unité de catalyse (26) et présente un profil, au niveau d'une extrémité aval, qui assure l'étanchéité avec la paroi interne de l'enveloppe (17) de manière à diriger le premier trajet (A) vers l'extérieur et autour de la seconde unité de catalyse (36).

10. Tracteur agricole (52) selon la revendication 9, dans lequel le moyen de transition comprend en outre un couvercle en forme de cône (34) qui recouvre l'extrémité amont de la seconde unité de catalyse (36), et des conduits (40) raccordent des orifices à l'intérieur des parois du collier (28) et du couvercle afin de diriger le second trajet (B) vers la seconde unité de catalyse (36).

11. Tracteur agricole (52) selon l'une quelconque des revendications précédentes, comprenant en outre un moyen d'association (42) raccordé à l'extrémité aval de la seconde unité de catalyse (36) qui associe le premier (A) et le second (B) trajets en amont de la sortie.

12. Tracteur agricole (52) selon la revendication 11, dans lequel le moyen d'association comprend un collier (42) qui présente un profil, au niveau d'une extrémité aval, qui assure l'étanchéité avec la paroi interne de l'enveloppe (17) et comprend des orifices (43) à travers lesquels passe le second trajet (B).

13. Tracteur agricole (52) selon l'une quelconque des revendications précédentes, dans lequel l'élément de division passif (24, 84) est conçu de telle sorte que les débits gazeux à travers chacun du premier (A) et du seconds (B) trajets sont sensiblement égaux.

14. Tracteur agricole (52) selon la revendication 3, dans lequel la première unité de catalyse (86) est décalée radialement vers l'arrière du tracteur et la seconde unité de catalyse (96) est décalée radialement vers l'avant du tracteur.

15. Tracteur agricole selon l'une quelconque des revendications précédentes, dans lequel l'empilage d'échappement (50, 110) est sensiblement aligné avec un montant avant de cabine (56) de telle sorte qu'un ligne de vision du conducteur coupe à la fois le montant et l'empilage (50, 110).
